Europäisches Patentamt

European Patent Office

Office européen des brevets

(19)

(11) Veröffentlichungsnummer: 0 116 917
A1

(12) # EUROPÄISCHE PATENTANMELDUNG

(21) Anmeldenummer: 84101379.0

(22) Anmeldetag: 10.02.84

(51) Int. Cl.³: C 08 F 6/02
C 08 F 10/02

(30) Priorität: 19.02.83 DE 3305782

(43) Veröffentlichungstag der Anmeldung:
29.08.84 Patentblatt 84/35

(84) Benannte Vertragsstaaten:
AT BE DE FR GB IT NL

(71) Anmelder: Ruhrchemie Aktiengesellschaft
Bruchstrasse 219
D-4200 Oberhausen 13(DE)

(72) Erfinder: Morguet, Hermann, Dr. Dipl.-Chem.
Rosenheimshof 14
D-4230 Wesel(DE)

(72) Erfinder: Payer, Wolfgang, Dr. Dipl.-Chem.
Zedernweg 58
D-4230 Wesel 1(DE)

(72) Erfinder: Bühnen, Heinz-Dieter, Dipl.-Ing.
Kapellenstrasse 56
D-4200 Oberhausen 12(DE)

(72) Erfinder: Zoller, Wilhelm, Dr. Dipl.-Chem.
Im Torfveen 26
D-4200 Oberhausen 14(DE)

(74) Vertreter: Reichelt, Karl-Heinz, Dr.
m. Br. Ruhrchemie Aktiengesellschaft Abt. PLD Postfach
13 01 60
D-4200 Oberhausen 13(DE)

(54) Verfahren zur Polymerisation und Copolymerisation von Ethylen.

(57) Die Desaktivierung von Katalysatorsystemen aus einer Übergangsmetallverbindung und einer organischen Aluminiumverbindung, die zur Polymerisation von Ethylen oder zur Copolymerisation von Ethylen mit einem α-Olefin bei Drücken oberhalb 500 bar und Temperaturen zwischen 150 und 350°C eingesetzt werden, erfolgt mit Stoffen, die unter Reaktionsbedingungen gasförmig sind.

EP 0 116 917 A1

**0116917**
Oberhausen 13, 16.02.1983
PLD rcht-sei     R 1948

Ruhrchemie Aktiengesellschaft, Oberhausen 13

## Verfahren zur Polymerisation und Copolymerisation von Ethylen

Die Erfindung betrifft ein kontinuierliches Verfahren zur Polymerisation und Copolymerisation von Ethylen bei Temperaturen zwischen 150 und 350°C und Drücken oberhalb 500 bar in Gegenwart von Ziegler-Katalysatoren.

Die Polymerisation und Copolymerisation von Ethylen in den genannten Temperatur- und Druckbereichen ist bekannt. Als Katalysatoren oder Initiatoren können die verschiedensten Substanzen eingesetzt werden, die im Verlauf der Reaktion Radikale oder Ionen bilden. Gebräuchliche Katalysatoren sind z.B. Sauerstoff, Peroxide wie Diacylperoxide oder Cumolhydroperoxid und aliphatische Azoverbindungen wie $\alpha,\alpha'$-Azo-isobutyronitril. Auch Ziegler-Katalysatoren, die ursprünglich für Niederdruckpolymerisation von Ethylen und Propylen entwickelt worden waren, finden inzwischen bei Hochdruckprozessen Anwendung.

Die Polymerisation oder Copolymerisation von Ethylen unter hohem Druck erfolgt in Autoklaven oder in sogenannten Röhrenreaktoren. Nach dem Verlassen des Hochdruckreaktors wird das Reaktionsgemisch in wenigstens einen Separator geleitet, in dem solche Druck- und Temperaturbedingungen herrschen, daß das Ethylen und gegebenenfalls vorhandene Comonomere in einer oder mehreren Stufen von dem im Reaktor gebildeten Polymeren abgetrennt wird.

- 2 -

Bei Verwendung von Ziegler-Katalysatoren ist wegen deren hoher Reaktivität nicht auszuschließen, daß noch vorhandene Monomere auch im Separator polymerisiert werden, wobei es zur Bildung unerwünschter, niedermolekularer Produkte wie Wachse, kommt.

Um eine Nachpolymerisation in den Abscheide- und Kühlapparaten des Gaskreislaufsystems zu verhindern, setzt man dem Reaktionsgemisch nach Verlassen des Reaktors Substanzen zu, die den Katalysator desaktivieren.

Aus der DE-OS 26 07 601 ist es bekannt, für diesen Zweck Alkali- und/oder Erdalkalisalze gesättigter Fettsäuren oder aromatischer Carbonsäuren oder auch Zinkstearat einzusetzen. Hierbei handelt es sich um zum Teil schwerlösliche Verbindungen, die als verdünnte Lösungen in Kohlenwasserstoffen gehandhabt werden müssen. Dadurch gelangen erhebliche Mengen Lösungsmittel in den Gaskreislauf, die mit dem Produkt ausgetragen oder anderweitig entfernt werden müssen. Darüber hinaus ist es technisch schwierig, kleine Mengen einer Lösung mit dem Polyethylen/Ethylen-Strom homogen zu vermischen. Eine völlige Unterbindung der Polymerisation hinter dem Reaktor ist nur dann möglich, wenn große Mengen der desaktivierenden Verbindung zugesetzt werden. Die dabei entstehenden Umsetzungsprodukte werden im Kreis dem Reaktor wieder zugeleitet und führen zu einer Beeinträchtigung der Polymerisationsreaktion.

Es bestand daher die Aufgabe, Verbindungen zu finden, die sich vollständig mit dem im Monomeren-Polymeren-Gemisch enthaltenen Katalysatorsystem zu nichtflüchtigen und nichtpolymerisationsaktiven Verbindungen umsetzen, leicht dosierbar sind und sich ohne Schwierigkeiten im Reaktionsgemisch homogen verteilen. Darüber hinaus sollen diese Verbindungen in lebensmittelrechtlicher Hinsicht unbedenklich sein und in den Produktionsanlagen keine Korrosionsprobleme hervorrufen.

Erfindungsgemäß wird die Aufgabe gelöst durch ein Verfahren zur Polymerisation von Ethylen oder zur Copolymerisation von Ethylen mit einem α-Olefin in einem rohrförmigen Reaktor oder in einem Autoklaven und in Gegenwart eines Katalysatorsystems, das aus einer Übergangsmetallverbindung und einer organischen Aluminiumverbindung besteht bei Drücken oberhalb 500 bar und Temperaturen zwischen 150 und 350°C, wobei das Katalysatorsystem mit einer ausreichenden Menge wenigstens eines desaktivierenden Stoffes so behandelt wird, daß die Reaktionsprodukte der Desaktivierung im Polymeren verbleiben können, dadurch gekennzeichnet, daß die desaktivierenden Stoffe unter den Reaktionsbedingungen gasförmig sind.

Als deskativierende Stoffe, die unter den Reaktionsbedingungen gasförmig sind, können die verschiedensten Substanzen eingesetzt werden. Als Beispiele sauerstoffhaltiger Verbindungen seien genannt Sauerstoff, Wasser, Äther, Alkohole, Carbonsäuren, Ester, Aldehyde, Ketone, Kohlenmonoxid und Kohlendioxid. Unter den stickstoffhaltigen Verbindungen kommen Ammoniak, Amine und Stickoxide in Betracht. Als schwefelhaltige Verbindungen Schwefelwasserstoff, Sulfide und Sulfoxide. Entscheidend ist, daß diese Verbindungen entsprechend den Druck- und den Temperaturverhältnissen in gasförmigem Zustand vorliegen. Dadurch wird sichergestellt, daß sie sich schnell und homogen im Monomeren-Polymeren-Strom verteilen. Als besonders geeignete und wirksame desaktivierende Verbindung hat sich das Kohlendioxid erwiesen. Kohlendioxid ist besonders leicht dosierbar, ergibt keine Nebenreaktionen und kann, ohne daß
Schwierigkeiten befürchtet werden müssen, im Endprodukt
verbleiben.

Die in dem erfindungsgemäßen Verfahren eingesetzten
Ziegler-Katalysatoren bestehen aus einer Übergangsmetallverbindung, im allgemeinen einer Titanverbindung. Besonders
geeignet ist Titantrichlorid, das gegebenenfalls mit
Aluminiumchlorid mischkristallisiert sein kann. Zweiter
Bestandteil des Katalysatorsystems ist eine organische
Aluminiumverbindung. Hierzu zählen Monoalkylaluminiumdihalogenid, Dialkylaluminiummonohalogenid und insbesondere
Trialkylaluminium. Die in den organischen Aluminiumverbindungen enthaltenen Alkylreste enthalten üblicherweise
jeweils 2 bis 20 Kohlenstoffatome.

Das erfindungsgemäße Verfahren ist ebenso für die Homopolymerisation von Ethylen geeignet, wie für die Copolymerisation von Ethylen mit anderen α-Olefinen. Solche
α-Olefine sind z.B. Propylen, Buten-1 und Hexen-1. Sie
sind im Polymerisat üblicherweise in Mengen bis 10 Gew.-%
enthalten.

Die Polymerisation oder Copolymerisation des Ethylens wird
in Autoklaven oder in Rohrreaktoren durchgeführt. Die Reaktionstemperatur beträgt 150 bis 350°C und insbesondere
170 bis 280°C, der Reaktionsdruck über 500 bar und insbesondere 800 bis 1600 bar. Bei Verwendung von Rohrreaktoren
werden die Monomeren zunächst auf die Reaktionstemperatur
von 130 bis 180°C aufgeheizt. Darauf dosiert man das Katalysatorsystem zu. Durch die freiwerdende Polymerisationswärme steigt die Temperatur des Reaktionsgemisches auf
Werte von 150 bis 350°C an. Danach fällt sie durch Wärmeabführung nach außen langsam wieder ab. Die Polymerisation kann durch Zugabe geeigneter Agenzien gesteuert werden; so fügt man den Monomeren zur Einstellung eines bestimmten Molekulargewichtsbereiches z.B. Wasserstoff zu. Nach einer Verweilzeit von 30 bis 240 sek. im Reaktor wird im Hochdruckabscheider auf 150 bis 300 bar entspannt. Das nichtumgesetzte Ethylen wird abgekühlt, neu komprimiert und dem Reaktor wieder zugeführt.

Die Polymerisation nach dem erfindungsgemäßen Verfahren wird kontinuierlich durchgeführt. Daher müssen die Desaktivatoren in das Reaktionsgemisch an einer Stelle eingeführt werden, wo die Polymerisation abgebrochen werden soll. Dieser Punkt kann sowohl vor als auch nach dem Reaktorauslaßventil liegen. Nach einer zweckmäßigen Ausgestaltung der neuen Arbeitsweise speist man den Desaktivator unmittelbar vor oder unmittelbar nach dem Reaktorauslaßventil ein. Nach einer anderen bevorzugten Ausführungsform des erfindungsgemäßen Verfahrens setzt man bei Durchführung der Polymerisation in einem rohrförmigen Reaktor den Desaktivator an einer Stelle, die 1/5 bis 1/2 der Reaktorlänge vor dem Auslaßventil liegt, zu.

Die Menge der zudosierten gasförmigen Verbindung muß ausreichen, um die Desaktivierung des Katalysatorsystems sicherzustellen. Diese Desaktivierung wird erreicht, wenn wenigstens eine Komponente des Katalysatorsystems, d.h. entweder die Übergangsmetallverbindung oder die organische Aluminiumverbindung mit dem Desaktivator reagiert hat. Üblicherweise setzt man die desaktivierenden Stoffe in einer Menge von 0,1 bis 2,0 Mol und insbesondere von 0,5 bis 1,5 Mol je Mol an Metall gebundenen Alkylgruppen ein.

Es hat sich gezeigt, daß bei einem Betrieb der Polymerisationsanlage ohne Desaktivator bereits nach wenigen Stunden Polymerbelegungen an den Kühlerinnenflächen des Kreislaufgassystems auftreten. Bei Einsatz der Desaktivatoren nach dem erfindungsgemäßen Verfahren bleiben die Kühlerinnenflächen des Kreislaufgassystems frei von hochmolekularen Wandbelägen.

Ruhrchemie Aktiengesellschaft, Oberhausen 13

Patentansprüche

1.) Verfahren zur Polymerisation von Ethylen oder zur
Copolymerisation von Ethylen mit einem $\alpha$-Olefin in einem
rohrförmigen Reaktor oder in einem Autoklaven und in Gegenwart eines Katalysatorsystems, das aus einer Übergangsmetallverbindung und einer organischen Aluminiumverbindung besteht bei Drücken oberhalb 500 bar und
Temperaturen zwischen 150 und 350°C, wobei das Katalysatorsystem mit einer ausreichenden Menge wenigstens
eines desaktivierenden Stoffes so behandelt wird, daß
die Reaktionsprodukte der Desaktivierung im Polymeren
verbleiben können, dadurch gekennzeichnet, daß die desaktivierenden Stoffe unter den Reaktionsbedingungen
gasförmig sind.

2.) Verfahren nach Anspruch 1, dadurch gekennzeichnet, daß
die desaktivierenden Stoffe sauerstoffhaltige Verbindungen
sind.

3.) Verfahren nach Anspruch 1 und 2, dadurch gekennzeichnet, daß die sauerstoffhaltigen Verbindungen Äther, Alkohole,
Carbonsäuren, Ester, Aldehyde, Ketone und Kohlenoxide sind.

4.) Verfahren nach Anspruch 1 bis 3, dadurch gekennzeichnet, daß die sauerstoffhaltige Verbindung Kohlendioxid
ist.

- 2 -

5.) Verfahren nach Anspruch 1, dadurch gekennzeichnet, daß die desaktivierenden Stoffe stickstoffhaltige Verbindungen sind.

6.) Verfahren nach Anspruch 1 und 5, dadurch gekennzeichnet, daß die stickstoffhaltigen Verbindungen Ammoniak, Amine oder Stickoxide sind.

7.) Verfahren nach Anspruch 1, dadurch gekennzeichnet, daß die desaktivierenden Stoffe schwefelhaltige Verbindungen sind.

8.) Verfahren nach Anspruch 1 und 7, dadurch gekennzeichnet, daß die schwefelhaltigen Verbindungen Schwefelwasserstoff, Sulfide oder Sulfoxide sind.

9.) Verfahren nach Anspruch 1 bis 8, dadurch gekennzeichnet, daß die desaktivierenden Stoffe unmittelbar vor oder unmittelbar nach dem Reaktorauslaßventil eingespeist werden.

10.) Verfahren nach Anspruch 1 bis 8, dadurch gekennzeichnet, daß bei Durchführung der Polymerisation in einem rohrförmigen Reaktor die desaktivierenden Stoffe an einer Stelle, die 1/5 bis 1/2 der Reaktorlänge vor dem Auslaßventil liegt, in den Reaktor eingespeist werden.

11.) Verfahren nach Anspruch 1 bis 10, dadurch gekennzeichnet, daß die desaktivierenden Stoffe in einer Menge von 0,1 bis 2,0 Mol, insbesondere 0,5 bis 1,5 Mol je Mol an Metall gebundene Alkylgruppen eingesetzt werden.

# EUROPÄISCHER RECHERCHENBERICHT

Europäisches
Patentamt

EP  84 10 1379

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 001 150  (SOLVAY) <br> *  Ansprüche 1-3; Seite 1, Zeilen 18-22; Seite 4, Zeilen 9, 12-14; Seite 5, Zeilen 4-7, 11,27; Seite 6, Zeile 7; Seite 7, Zeilen 16-21; Seite 9, Zeilen 3-6 * <br><br> --- | 1,2 | C 08 F    6/02 <br> C 08 F   10/02 |
| A | FR-A-2 274 633  (MITSUBISHI) <br> *  Anspruch 1; Seite 3, Zeilen 1,21; Seite 4, Zeilen 1-4, 7-9 * <br><br> --- | 1 | |
| D,A | FR-A-2 302 305  (SOCIETE CHIMIQUE DES CHARBONNAGES) <br> * Anspruch 1 * <br><br> ----- | 1 | |
|  |  |  | **RECHERCHIERTE SACHGEBIETE (Int. Cl. ³)** <br><br> C 08 F |

Der vorliegende Recherchenbericht wurde für alle Patentansprüche erstellt.

| Recherchenort <br> DEN HAAG | Abschlußdatum der Recherche <br> 11-05-1984 | Prüfer <br> BOLETTI C.M. |
|---|---|---|